# EUROPEAN PATENT APPLICATION

(11) **EP 3 859 561 A1**
(43) Date of publication of application: **04.08.2021**
(21) Application number: 19874549.9
(22) Date of filing: 14.10.2019
(51) Int. Cl.: G06F 16/732

(54) **METHOD FOR PROCESSING VIDEO FILE, AND ELECTRONIC DEVICE**

(30) Priority: 16.10.2018 CN 201811204663
(71) Applicant: Huawei Technologies Co., Ltd., Shenzhen Guangdong 518129 (CN)
(72) Inventor: WU, Peihua, Shenzhen, Guangdong 518129 (CN); LIU, Xiaodong, Shenzhen, Guangdong 518129 (CN); ZHOU, Chengfu, Shenzhen, Guangdong 518129 (CN); HE, Liping, Shenzhen, Guangdong 518129 (CN); LIANG, Haowei, Shenzhen, Guangdong 518129 (CN)
(74) Representative: Epping - Hermann - Fischer
(86) International application number: PCT/CN2019/110921
(87) International publication number: WO 2020/078299

(57) **Abstract**

This application relates to the field of communications technologies, and provides a video file processing method and an electronic device (100), to intelligently extract a clip and/or a picture of a specific element in a video, thereby simplifying user operations and improving user experience. The method specifically includes: obtaining, by an electronic device (100), first video information, where the first video information includes at least a part of a target video or a target picture; recognizing, by the electronic device (100), a target element included in the first video information; and generating, by the electronic device (100) based on the first video information, the target video or the target picture that includes the target element.

## Description

This application claims priority to Chinese Patent Application No. CN 201811204663.X, filed with the China National Intellectual Property Administration on October 16, 2018 and entitled "VIDEO FILE PROCESSING METHOD AND ELECTRONIC DEVICE", which is incorporated herein by reference in its entirety.

### TECHNICAL FIELD

This application relates to the field of communications technologies, and in particular, to a video file processing method and an electronic device.

### BACKGROUND

With popularization of mobile terminals, users use camera applications more frequently. Therefore, a large quantity of video files are stored in a mobile terminal, for example, a video shot by a user through a camera application, a video sent by another user, and a video downloaded from the internet.

However, content in these videos has different meanings and values for the user. In other words, the user may be interested in only some content in the videos. For example, in a large quantity of videos sent by a kindergarten teacher to parents, the user may be interested in only videos or clips about the user's child.

Currently, some video applications can provide a manual video clipping function. However, to use this function, the user needs to play each video and slide a play progress bar to find and obtain a desired clip through editing. Because a location of the desired clip of the user in the video is unknown, the user is very likely to constantly slide the play progress bar back and forth to search for the clip. It is clear that user operations are complex and time-consuming. In addition, some clips that the user is interested in are prone to be missed, resulting in poor user experience.

### SUMMARY

This application provides a video file processing method and an electronic device, to intelligently extract a clip and/or a picture of a specific element in a video, thereby simplifying user operations and improving user experience.

According to a first aspect, a method provided in this application includes: obtaining, by an electronic device, first video information, where the first video information includes at least a part of a target video or a target picture; recognizing, by the electronic device, a target element included in the first video information; and generating, by the electronic device based on the first video information, the target video or the target picture that includes the target element.

It can be learned that according to the method provided in the embodiments of this application, the electronic device can automatically recognize specific elements, such as a person that a user is interested in, a building that the user is interested in, and a pet that the user is interested in, in the video files, and automatically extract, from the video files, information about clips including the specific elements. This avoids a case in which the user manually searches for and edits a video, so that efficiency of interaction between the user and a terminal is improved, and user experience is improved.

In a possible implementation, the recognizing, by the electronic device, a target element included in the first video information includes: performing, by the electronic device, frame extraction on the first video information, to obtain at least one first image; and performing, by the electronic device, cluster analysis on the at least one first image, to determine at least one second image, where the second image includes the target element.

In a possible implementation, the method further includes: displaying, by the electronic device, an icon of the target video or the target picture based on a preset priority, where the priority is a display order of the target video or the target picture.

In a possible implementation, the preset priority includes an order of closeness between the target element and a user, and the closeness between the target element and the user is positively correlated with a quantity of pictures or videos that include the target element and that are stored in the electronic device.

In a possible implementation, the picture or the video that includes the target element and that is stored in the electronic device is any one or more of a picture or a video in a gallery application, a picture or a video in a social network application, and a user avatar.

In a possible implementation, the generating, by the electronic device based on the first video information, the target video or the target picture that includes the target element includes: generating, by the electronic device based on the first video information and the closeness between the target element and the user, the target video or the target picture that includes the target element, where duration of the target video is positively correlated with the closeness between the target element and the user, or a quantity of target pictures is positively correlated with the closeness between the target element and the user.

In a possible implementation, the obtaining, by an electronic device, first video information includes: automatically obtaining, by the electronic device, video information in a video file; or
automatically obtaining, by the electronic device, video information in a video file when detecting that the electronic device is playing the video file; or obtaining, by the electronic device, recorded video information in a video file when detecting that the electronic device is recording the video file; or obtaining, by the electronic device, video information in a video file when detecting a first operation of the user for choosing to process the video file.

In a possible implementation, the target element includes any one of a portrait, an action, a building, an animal, and an article.

According to a second aspect, an electronic device is provided, including a processor, a memory, and a touchscreen. The memory and the touchscreen are coupled to the processor, the memory is configured to store computer program code, the computer program code includes a computer instruction, and when the processor reads the computer instruction from the memory, the electronic device is enabled to perform the following operations: obtaining first video information, where the first video information includes at least a part of a target video or a target picture; recognizing a target element included in the first video information; and generating, based on the first video information, the target video or the target picture that includes the target element.

In a possible implementation, in a process in which the processor recognizes the target element included in the first video information and determines the target video or the target picture corresponding to the target element, the processor is specifically configured to: perform frame extraction on the first video information, to obtain at least one first image; and perform cluster analysis on the at least one first image, to determine at least one second image, where the second image includes the target element.

In a possible implementation, the touchscreen is configured to display an icon of the target video or the target picture based on a preset priority, where the priority is a display order of the target video or the target picture.

In a possible implementation, the preset priority includes an order of closeness between the target element and a user, and the closeness between the target element and the user is positively correlated with a quantity of pictures or videos that include the target element and that are stored in the electronic device.

In a possible implementation, the picture or the video that includes the target element and that is stored in the electronic device is any one or more of a picture or a video in a gallery application, a picture or a video in a social network application, and a user avatar.

In a possible implementation, in a process in which the processor generates, based on the first video information, the target video or the target picture that includes the target element, the processor is further specifically configured to generate, based on the first video information and the closeness between the target element and the user, the target video or the target picture that includes the target element, where duration of the target video is positively correlated with the closeness between the target element and the user, or a quantity of target pictures is positively correlated with the closeness between the target element and the user.

In a possible implementation, in a process in which the processor obtains the first video information, the processor is specifically configured to: automatically obtain video information in a video file; or
automatically obtain video information in a video file when detecting that the electronic device is playing the video file; or obtain recorded video information in a video file when detecting that the electronic device is recording the video file; or obtain video information in a video file when detecting a first operation of the user for choosing to process the video file.

In a possible implementation, the target element includes any one of a portrait, an action, a building, an animal, and an article.

According to a third aspect, a computer storage medium is provided, and includes a computer instruction. When the computer instruction is run on a terminal, the terminal is enabled to perform the method in any one of the first aspect and the possible implementations of the first aspect.

According to a fourth aspect, a computer program product is provided. When the computer program product is run on a computer, the computer is enabled to perform the method in any one of the first aspect and the possible implementations of the first aspect.

### BRIEF DESCRIPTION OF DRAWINGS

FIG. 1 is a schematic structural diagram 1 of an electronic device according to an embodiment of this application;
FIG. 2 is a schematic structural diagram 2 of an electronic device according to an embodiment of this application;
FIG. 3(1) to FIG. 3(6) are a schematic diagram of some user interfaces of an electronic device according to an embodiment of this application;
FIG. 4(1) and FIG. 4(2) are a schematic diagram of some other user interfaces of an electronic device according to an embodiment of this application;
FIG. 5 is a schematic flowchart of a video file processing method according to an embodiment of this application;
FIG. 6(1) to FIG. 6(3) are a schematic diagram of a process of a video file processing method according to an embodiment of this application; and
FIG. 7(1) and FIG. 7(2) are a schematic diagram of some other user interfaces of an electronic device according to an embodiment of this application.

### DESCRIPTION OF EMBODIMENTS

The following describes the technical solutions in embodiments of this application with reference to accompanying drawings in the embodiments of this application. In descriptions of the embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of the embodiments of this application, unless otherwise stated, "a plurality of' means two or more than two.

According to a video file processing method provided in the embodiments of this application, an electronic device may process a video file that is being recorded, a video file that is being played, a stored video file, a video file that is played online, or the like. Specifically, the electronic device can automatically recognize specific elements, such as a person that a user is interested in, a building that the user is interested in, and a pet that the user is interested in, in the video files, and automatically extract, from the video files, information about clips including the specific elements. The electronic device may further perform processing, such as merging, on information about clips that are in one or more video files and that include a same element. In this way, the user may directly view a clip or a picture set corresponding to a specific element. The clip may be all clips or picture sets that include the element in one video file, or may be all clips or picture sets that include the element in a plurality of video files.

For example, the electronic device in this application may be a mobile phone, a tablet computer, a personal computer (Personal Computer, PC), a personal digital assistant (personal digital assistant, PDA), a smartwatch, a netbook, a wearable electronic device, an augmented reality (Augmented Reality, AR) device, a virtual reality (Virtual Reality, VR) device, a vehicle-mounted device, a smart automobile, a smart speaker, a robot, or the like. This application imposes no special limitation on a specific form of the electronic device.

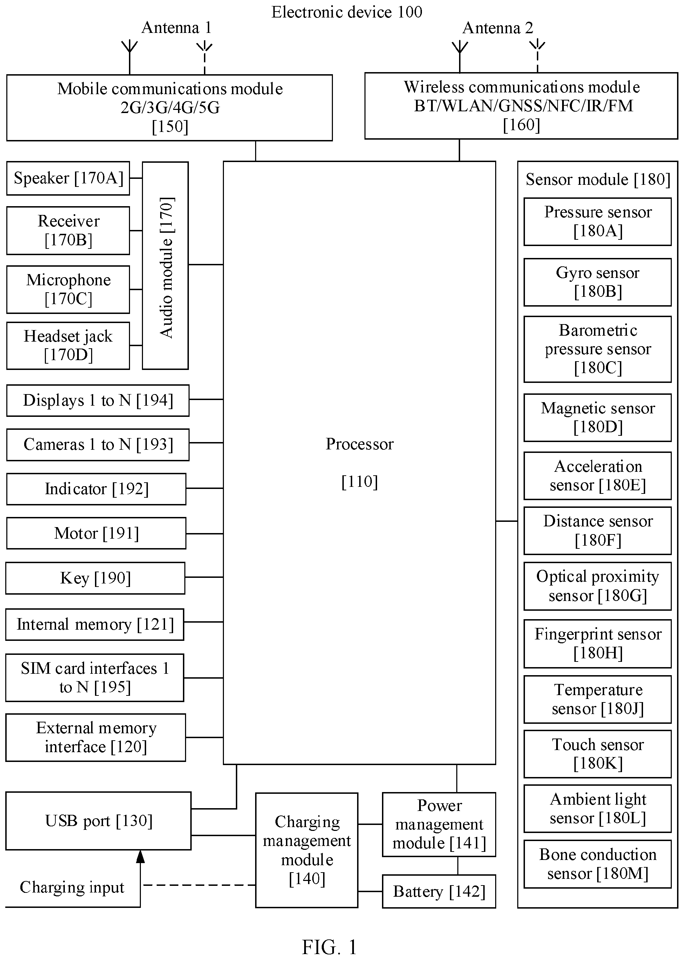

FIG. 1 is a schematic diagram of a structure of an electronic device 100.

The electronic device 100 may include a processor 110, an external memory interface 120, an internal memory 121, a universal serial bus (universal serial bus, USB) port 130, a charging management module 140, a power management module 141, abattery 142, an antenna 1, an antenna 2, a mobile communications module 150, a wireless communications module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

The memory may further be disposed in the processor 110, and is configured to store an instruction and data. In some embodiments, the memory in the processor 110 is a cache. The memory may store an instruction or data that is just used or that is cyclically used by the processor 110. If the processor 110 needs to use the instruction or the data again, the processor 110 may directly invoke the instruction or the data from the memory. This avoids repeated access and reduces a waiting time of the processor 110, so that system efficiency is improved.

In the embodiments of this application, the processor 110 may read information about a video file, perform frame extraction on the video file to obtain a plurality of first image frames, and then determine, based on an image recognition technology, whether the first image frame includes a specific type of element (for example, a face). Further, the processor 110 determines second image frames that include the specific type of element. Then, the processor 110 performs clustering on the second image frames based on the specific type of element, that is, classifies the second image frames, marks, by using a same identifier, second image frames having a same element, and marks, by using different identifiers, second image frames having different elements. Subsequently, the processor 110 determines information about a clip corresponding to each element, and stores the information in the memory. When a user views a clip corresponding to a specific element, the processor reads, from the memory, information about the clip corresponding to the specific element, and plays the clip. In some embodiments, steps related to image processing may be performed in the NPU, to improve system processing efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) port, and/or the like.

The I2C interface is a two-way synchronous serial bus, and includes a serial data line (serial data line, SDA) and a serial clock line (derail clock line, SCL). In some embodiments, the processor 110 may include a plurality of groups of I2C buses. The processor 110 may be coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call through a Bluetooth headset.

The PCM interface may also be configured to: perform audio communication, and sample, quantize, and code an analog signal. In some embodiments, the audio module 170 may be coupled to the wireless communications module 160 through the PCM bus interface. In some embodiments, the audio module 170 may also transmit an audio signal to the wireless communications module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured through software. The GPIO interface may be configured as a control signal, or may be configured as a data signal. In some embodiments, the GPIO interface may be configured to connect the processor 110 to the camera 193, the display 194, the wireless communications module 160, the audio module 170, the sensor module 180, and the like. The GPIO interface may be alternatively configured as the I2C interface, the I2S interface, the UART interface, the MIPI interface, or the like.

The USB port 130 is a port that conforms to a USB standard specification, and may be specifically a mini USB port, a micro USB port, a USB Type-C port, or the like. The USB port 130 may be configured to connect to the charger to charge the electronic device 100, or may be configured to perform data transmission between the electronic device 100 and a peripheral device, or may be configured to connect to a headset to play audio through the headset. The interface may further be configured to connect to another electronic device such as an AR device.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB port 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communications module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communications module 150, the wireless communications module 160, a modem processor, a baseband processor, and the like.

The antenna 1 and the antenna 2 are configured to transmit and receive electromagnetic wave signals. Each antenna in the electronic device 100 may be configured to cover one or more communications frequency bands. Different antennas may further be multiplexed, to improve antenna utilization. For example, the antenna 1 may be multiplexed as a diversity antenna in a wireless local area network. In some other embodiments, the antenna may be used in combination with a tuning switch.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some function modules in the mobile communications module 150 may be disposed in the processor 110. In some embodiments, at least some function modules in the mobile communications module 150 and at least some modules in the processor 110 may be disposed in a same component.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor, and is then transferred to an application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communications module 150 or another function module.

The wireless communications module 160 may provide a wireless communication solution that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, or the like and that is applied to the electronic device 100. The wireless communications module 160 may be one or more components integrating at least one communications processor module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communications module 150 in the electronic device 100 are coupled, and the antenna 2 and the wireless communications module 160 in the electronic device 100 are coupled, so that the electronic device 100 can communicate with a network and another device through a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements the display function through a GPU, the display 194, the application processor, and the like. The GPU is a microprocessor for image processing, and is connected to the display 194 and the application processor. The GPU is configured to perform mathematical and geometric calculation, and is configured to render an image. The processor 110 may include one or more GPUs that execute a program instruction to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini LED, a micro LED, a micro-OLED, a quantum dot light-emitting diode (quantum dot light-emitting diodes, QLED), or the like. In some embodiments, the electronic device 100 may include one or N displays 194. N is a positive integer greater than 1.

The electronic device 100 may implement the photographing function through the ISP, the camera 193, the video codec, the GPU, the display 194, the application processor, and the like.

The ISP is configured to process data fed back by the camera 193. For example, during photographing, a shutter is pressed, a ray of light is transmitted to a light-sensitive element of the camera through a lens, and an optical signal is converted into an electrical signal. The light-sensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected to the light-sensitive element. The light-sensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to a DSP for processing. The DSP converts the digital image signal into an image signal of a standard format such as RGB or YUV. In some embodiments, the electronic device 100 may include one or N cameras 193. N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. In this way, the electronic device 100 can play or record videos of a plurality of coding formats, for example, moving picture experts group (moving picture experts group, MPEG) 1, MPEG 2, MPEG 3, and MPEG 4.

The NPU is a neural network (neural network, NN) computing processor, quickly processes input information by referring to a structure of a biological neural network, for example, by referring to a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code, and the executable program code includes an instruction. The processor 110 runs the instruction stored in the internal memory 121 to perform various function applications of the electronic device 100 and process data. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash memory device, or a universal flash storage (universal flash storage, UFS).

In the embodiments of this application, the internal memory 121 may store information about each element extracted from a video file according to the method provided in the embodiments of this application, and information about a clip corresponding to each element. The internal memory 121 may further store association information between each element extracted from the video file and some existing elements in the electronic device, for example, association information between a person extracted from the video file and a picture related to the person in a gallery application. For details, refer to the following description.

The electronic device 100 can implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: code and decode audio signals. In some embodiments, the audio module 170 may be disposed in the processor 110, or some function modules in the audio module 170 are disposed in the processor 110.

The speaker 170A, also referred to as a "horn", is configured to convert an audio electrical signal into a sound signal. The electronic device 100 may listen to music or answer a hands-free call through the speaker 170A.

The receiver 170B, also referred to as an "earpiece", is configured to convert an audio electrical signal into a sound signal. When the electronic device 100 answers a call or receives a voice message, the receiver 170B may be placed close to a human ear to listen to a voice. The microphone 170C, also referred to as a "mike" or a "microphone", is configured to convert a sound signal into an electrical signal. When making a call or sending a voice message, a user may place the mouth of the user near the microphone 170C to make a sound, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, reduce noise, identify a sound source, implement a directional recording function, and the like. The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the capacitance change. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a messaging application icon, an instruction for viewing an SMS message is executed. When a touch operation whose touch operation intensity is greater than or equal to a first pressure threshold is performed on a messaging icon, an instruction for creating a new SMS message is executed.

The gyro sensor 180B may be configured to determine a motion posture of the electronic device 100. In some embodiments, an angular velocity of the electronic device 100 around three axes (namely, x, y, and z axes) may be determined through the gyro sensor 180B. The gyro sensor 180B may be configured to perform image stabilization during photographing. For example, when the shutter is pressed, the gyro sensor 180B detects an angle at which the electronic device 100 jitters, obtains, through calculation based on the angle, a distance for which a lens module needs to compensate, and allows the lens to cancel the jitter of the electronic device 100 through reverse motion, to implement the image stabilization. The gyro sensor 180B may also be used in a navigation scenario and a somatic game scenario.

The barometric pressure sensor 180C is configured to measure atmospheric pressure. In some embodiments, the electronic device 100 calculates an altitude based on a value of the atmospheric pressure measured by the barometric pressure sensor 180C, to assist positioning and navigation.

The magnetic sensor 180D includes a Hall sensor. The electronic device 100 may detect opening/closing of a flip leather case through the magnetic sensor 180D. In some embodiments, when the electronic device 100 is a clamshell phone, the electronic device 100 may detect opening/closing of a flip cover through the magnetic sensor 180D. Further, a feature such as automatic unlocking upon cover flipping is set based on a detected opening/closing state of the leather case or a detected opening/closing state of the flip cover.

The acceleration sensor 180E may detect magnitude of accelerations of the electronic device 100 in various directions (usually on three axes), and may detect magnitude and a direction of the gravity when the electronic device 100 is still. The acceleration sensor 180E may further be configured to identify a posture of the electronic device, and is applied to an application such as switching between landscape mode and portrait mode or a pedometer.

The distance sensor 180F is configured to measure a distance. The electronic device 100 may measure the distance through infrared or a laser. In some embodiments, in a photographing scenario, the electronic device 100 may measure a distance through the distance sensor 180F to implement quick focusing.

For example, the optical proximity sensor 180G may include a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When detecting sufficient reflected light, the electronic device 100 may determine that there is an object near the electronic device 100. When detecting insufficient reflected light, the electronic device 100 may determine that there is no object near the electronic device 100. The electronic device 100 can detect, through the optical proximity sensor 180G, that the user holds the electronic device 100 close to an ear to make a call, and then can automatically turn off a screen for power saving. The optical proximity sensor 180G may also be used in a flip cover mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption to implement thermal protection. In some other embodiments, when the temperature is less than another threshold, the electronic device 100 heats the battery 142 to prevent the electronic device 100 from being shut down abnormally because of a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194. The touch sensor 180K and the display 194 form a touchscreen, which is also referred to as a "touchscreen". The touch sensor 180K is configured to detect a touch operation performed on or near the touch sensor 180K. The touch sensor may transfer the detected touch operation to the application processor, to determine a type of a touch event. Visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone at a human vocal-cord part. The bone conduction sensor 180M may also contact a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone at the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The key 190 includes a power key, a volume key, and the like. The key 190 may be a mechanical key, or may be a touch key. The electronic device 100 may receive a key input, and generate a key signal input related to user settings and function control of the electronic device 100.

The motor 191 may generate a vibration prompt. The motor 191 may be used for an incoming call vibration prompt, or may be used for a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect can also be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces. N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may have a same type or different types. The SIM card interface 195 may also be compatible with different types of SIM cards. The SIM card interface 195 may also be compatible with an external memory card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In the embodiments of the present invention, an Android system with the layered architecture is used as an example to illustrate a software structure of the electronic device 100.

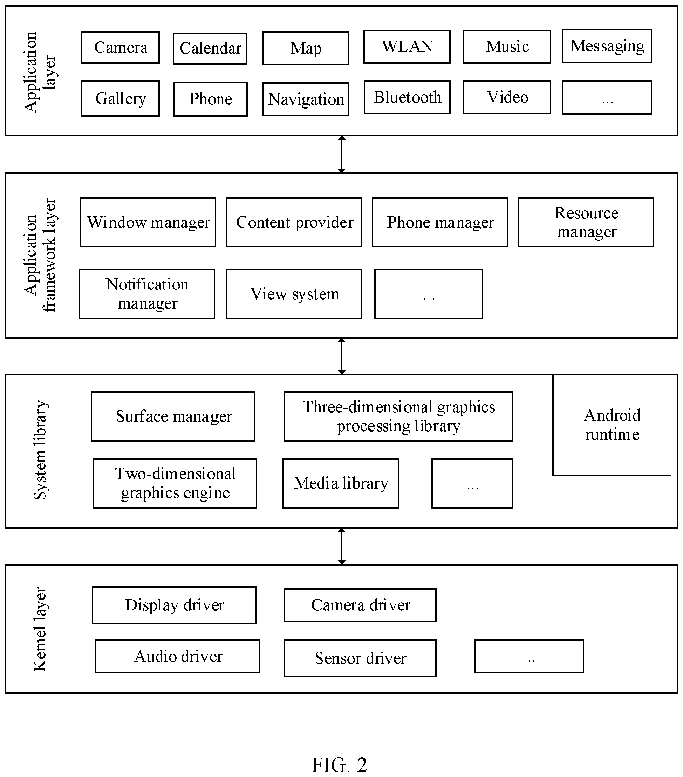

FIG. 2 is a block diagram of a software structure of the electronic device 100 according to an embodiment of the present invention.

In the layered architecture, software is divided into several layers, and each layer has a clear role and task. The layers communicate with each other through software interfaces. In some embodiments, the Android system is divided into four layers, that is, an application layer, an application framework layer, an Android runtime (Android runtime) and system library, and a kernel layer from top to bottom.

The application layer may include a series of application packages.

As shown in FIG. 2, the application layer may include application packages such as "camera", "gallery", "calendar", "phone", "map", "navigation", "WLAN", "Bluetooth", "music", "video", and "messaging".

The application framework layer provides an application programming interface (application programming interface, API) and a programming framework for an application at the application layer. The application framework layer includes some predefined functions.

In the embodiments of this application, related applications may include an application that can play a video file, such as "gallery", "camera", "video", or "browser".

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and received, a browsing history and bookmarks, an address book, and the like.

In the embodiments of this application, the application configured to play a video file may obtain, through the content provider, information about the video file stored in the electronic device.

The view system includes visual controls such as a control for displaying a text and a control for displaying an image. The view system can be configured to construct an application. A display interface may include one or more views. For example, a display interface including an SMS message notification icon may include a text display view and an image display view.

In the embodiments of this application, the application configured to play a video file may display, through the view system, an icon of each element extracted from the video file, and the like.

The phone manager is configured to provide a communication function of the electronic device 100, for example, management of a call status (including answering, declining, or the like).

The resource manager provides various resources for an application, such as a localized string, an icon, an image, a layout file, and a video file.

The notification manager enables an application to display notification information in a status bar, and may be configured to convey a notification message. The notification manager may automatically disappear after a short pause without requiring user interaction. For example, the notification manager is configured to: notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog box. For example, text information is prompted in the status bar, an alert sound is produced, the electronic device vibrates, or an indicator blinks.

The Android runtime includes a core library and a virtual machine. The Android runtime is responsible for scheduling and management of the Android system.

The core library includes two parts: functions to be invoked in Java and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D image layers for a plurality of applications.

The media library supports playback and recording in a plurality of commonly used audio and video formats, static image files, and the like. The media library may support a plurality of audio and video coding formats such as MPEG 4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

All technical solutions in the following embodiments may be implemented on the electronic device 100 that has the foregoing hardware architecture and software architecture.

The technical solutions provided in the embodiments of this application are described below in detail with reference to the accompanying drawings.

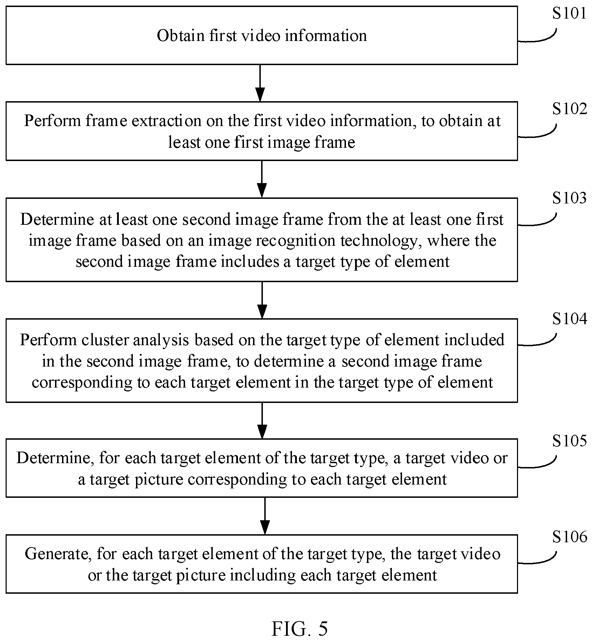

FIG. 5 is a flowchart of a video file processing method according to an embodiment of this application. Details are as follows:
S101: Obtain first video information.

Usually, during production of a video file, original video data and original audio data are independently encoded to obtain separate compressed video data and compressed audio data. Then, for ease of transmission, the separate compressed video data and compressed audio data are encapsulated to obtain the video file. Therefore, when the video file is played, the video file needs to be decapsulated to obtain the separate compressed video data and compressed audio data, and then the compressed video data and the compressed audio data are separately decoded to obtain the original video data and the original audio data. Subsequently, the original video data is sent to a display device frame by frame for display, and the original audio data is sent to an audio device for play. In this embodiment of this application, an electronic device may obtain the original video data and the original audio data in the video file.

In some embodiments, when a first video is a video that is being recorded by a user, that is, when it is detected that the electronic device is recording the first video, the electronic device may directly obtain partial original video data that is of the first video and that is generated during recording, and use the partial original video data as the first video information. Certainly, the electronic device may continuously obtain original video data constantly generated during recording of the first video, until the recording of the first video is completed, to obtain all original video data of the first video.

In some other embodiments, when a first video is a video that is being played by a user, that is, when it is detected that the electronic device is playing the first video, the electronic device may directly obtain partial original video data that is of the first video and that is decoded during playing, and use the partial original video data as the first video information. Certainly, the electronic device may continuously obtain original video data constantly decoded during playing of the first video, until all original video data of the first video is obtained.

It may be understood that the video being played by the user may be a locally stored video, or may be an online video. Regardless of a type of the video, during playing, a player decapsulates and decodes the first video, and therefore, can obtain the original video data.

In still some other embodiments, when a first video is a video stored in the electronic device, the first video is usually stored in an SD card or a storage card of the electronic device. To be specific, when detecting that a file of the first video is stored in the electronic device, the electronic device decapsulates the first video to obtain compressed video data and compressed audio data, and then decodes the compressed video data to obtain original video data.

In still some other embodiments, the electronic device may predetermine whether a clip including a specific element needs to be extracted. To be specific, if the clip including the specific element needs to be extracted from the first video, step S102 and subsequent steps are performed; or if the clip including the specific element does not need to be extracted from the first video, step S 102 is not performed. For example, determining may be performed based on some field information, such as duration, a frame rate, and resolution, in the first video information. For example, if the duration of the first video is excessively short, the clip does not need to be extracted from the first video. Alternatively, if the duration of the first video is excessively long, extraction workload is relatively high, efficiency is low, and the clip may not be extracted from the first video. If the frame rate of the first video is excessively low, for example, if the first video is a slow-motion video, a viewing effect is not good after the clip is extracted, and the clip may not be extracted. If the resolution of the first video is relatively low, an effect of the video is not good, and the clip does not need to be extracted.

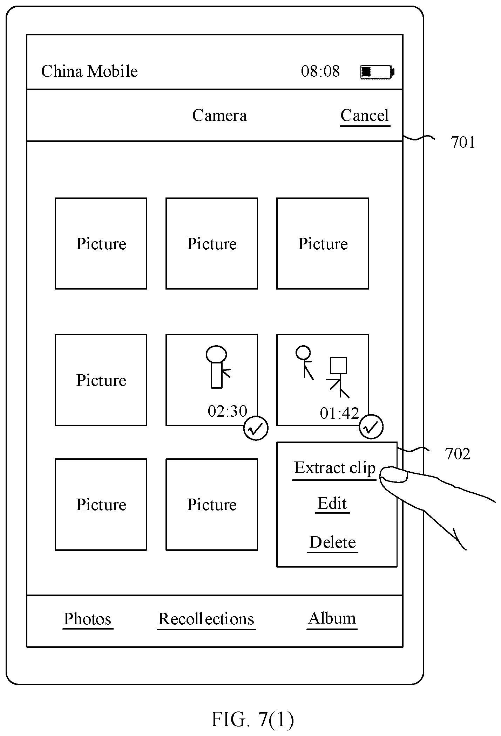

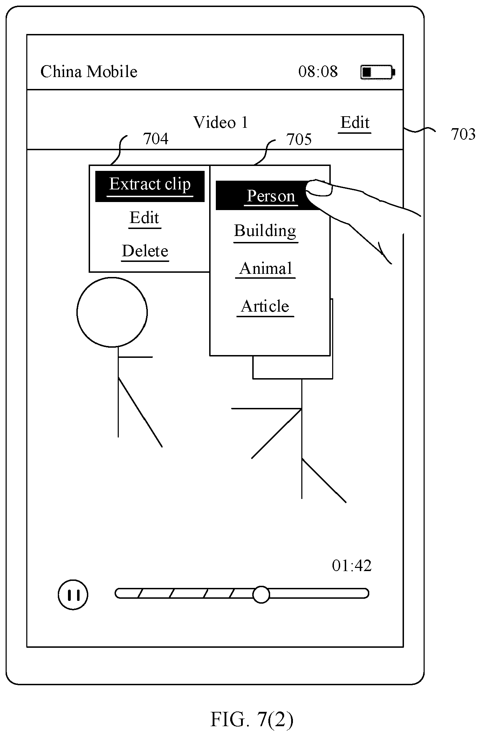

In some embodiments, the electronic device may automatically perform, on all video files stored in the electronic device or all video files stored in a specific application (for example, a gallery application, WeChat, or a browser application), a method for extracting a clip or a video including a specific element from a video in this embodiment of this application. In some other embodiments, based on selection of the user, the electronic device may alternatively perform an extraction method in this embodiment of this application on a video file selected by the user. For example, as shown in FIG. 7(1), an interface 701 is a video file browsing interface. The user may select a corresponding video file in the browsing interface in the interface 701, and then choose to perform an extraction function (for example, may select an "extract clip" function in an option menu 702, or may tap a control associated with the extraction function in the interface). In this case, in response to an operation of the user, the electronic device starts to perform, on the selected video file, the video file processing method provided in this embodiment of this application. Alternatively, the user may choose to perform an extraction function in an interface in which the first video is recorded or in an interface in which the first video is played. For another example, as shown in FIG. 7(2), an interface 703 is a video file playing interface. An "extract clip" function in a menu 704 may be selected on the electronic device. Optionally, the user may further select a "person" option in a submenu 705, and then the electronic device extracts a person included in the first video. A specific operation in which the user chooses to perform the extraction function is not limited in this embodiment of this application.

S 102: Perform frame extraction on the first video information, to obtain at least one first image frame.

The electronic device may periodically or aperiodically extract a specific quantity of first image frames from the first video, to analyze the extracted first image frames. A time length of an interval for extracting the first image frame by the electronic device may be determined based on a requirement of the user for precision of an extracted clip. If the user has a relatively high requirement on the precision of the extracted clip, it is determined that an interval time period is relatively short. If the user has a relatively low requirement on the precision of the extracted clip, it is determined that an interval time period is relatively long.

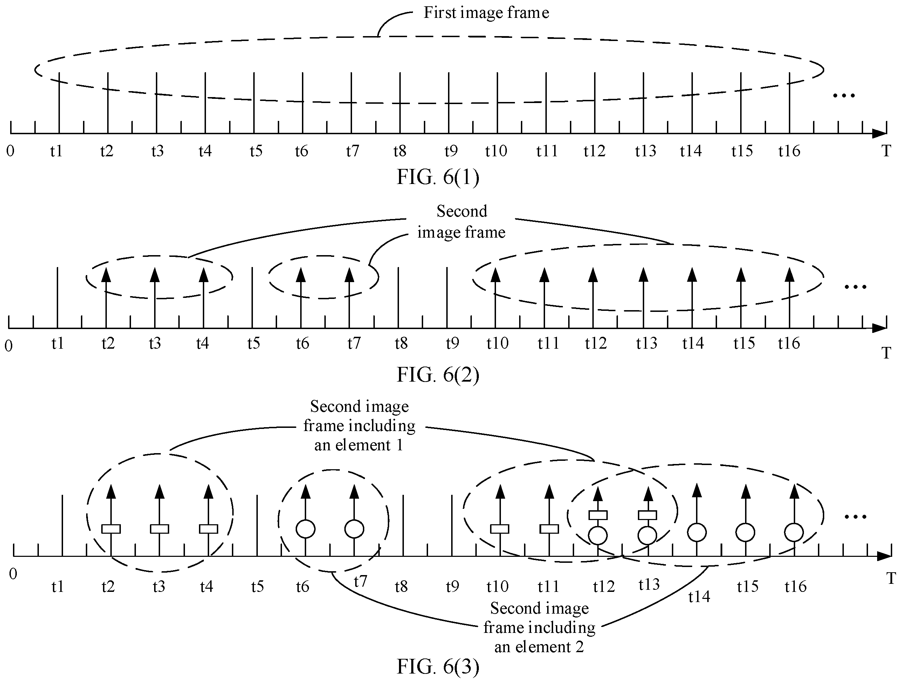

As shown in FIG. 6(1), it is assumed that a moment 0 to a moment T are a schematic diagram of a time axis of the first video. The moment 1 to the moment T include a plurality of image frames in the first video. The electronic device extracts some image frames from the plurality of image frames at an interval of a specific time period (for example, at a moment t1, a moment t2, and a moment t3), and uses the some image frames as first image frames.

S103: Determine at least one second image frame from the at least one first image frame based on an image recognition technology, where the second image frame includes a target type of element.

The target type of element may be any one or more of a face, an expression, an action, an article, a building, a pet, and a user-defined type, and may be determined based on desired content of the user in the first video. For example, if the user is interested in one or more persons in the video, the target type of element may be set to a face. For another example, if the user is interested in a related building or place in the video, the target type of element may be set to the building, the place, or the like.

As shown in FIG. 6(2), the electronic device may process an image based on the image recognition technology, for example, based on a computer vision (Computer Vision, CV) engine, determine whether the extracted first image frame includes the target type of element, and determine a first image frame including the target type of element as a second image frame (which is shown by using a line with an arrow in the figure). The second image frame includes the element of the type that the user is interested in.

An example in which a face is a target element is used for description. For example, the electronic device may determine, according to a face detection (Face Detection) algorithm in the image recognition technology, whether a face exists in each first image frame. A common face detection algorithm is a process of "scanning" and "determining", that is, a process of using the algorithm to scan an image range of each first image frame and then determine one by one whether a candidate area includes a face. If it is determined that the candidate area includes the face, it is considered that the first image frame is a second image frame.

In some embodiments of this application, after determining a second image frame including a first type of element, the electronic device may perform aesthetic scoring on each second image frame. Certainly, the electronic device may perform aesthetic scoring after determining all second image frames, or the electronic device may perform aesthetic scoring on a determined second image frame when determining one or more second image frames. Specifically, an aesthetic scoring algorithm may be used. A score evaluated according to the algorithm not only can be used to evaluate technical factors such as out-of-focus and a jitter of the second image frame, but also can be used to evaluate a subjective "beauty" feeling from perspectives such as a skew, a color, and image composition. This may be simply understood as that a higher aesthetic score indicates better image quality of an image frame. In this way, when displaying a related clip or picture, the electronic device may recommend, to the user, some clips and pictures with relatively good picture quality. The clips and pictures may be considered as selected clips and selected pictures. It should be noted that the step of performing aesthetic scoring on the second image frame may be processed in parallel or in series with a subsequent step such as performing clustering on the second image frame. This is not limited in this embodiment of this application.

It may be understood that, after step S102, the electronic device may start to perform aesthetic scoring on the first image frame extracted from the first video. In some other embodiments, if the first image frame includes no second image frame including the target element, that is, if the first image frame includes no element that the user is interested in, the electronic device may extract some clips or picture sets with relatively high aesthetic scores.

S104. Perform cluster analysis based on the target type of element included in the second image frame, to determine a second image frame corresponding to each target element in the target type of element.

In step S103, the electronic device determines the second image frame that includes the first type of element. Because there may be a plurality of elements of the first type, one second image frame may include one or more elements. Therefore, the electronic device may further extract a feature of an element included in each second image frame, and classify the second image frame based on the feature. Second image frames of a same type include a same element. For a clustering algorithm used for classification, refer to the prior art. Details are not described herein.

In some embodiments of this application, the electronic device may mark, by using a same identifier, image frames including a same element, and mark, by using different identifiers, image frames including different elements. It should be noted that one image frame may include a plurality of elements. Therefore, one image frame may have a plurality of identifiers. A specific marking manner is not limited in this embodiment of this application. As shown in FIG. 6(3), second image frames at moments t2, t3, t4, t10, t11, t12, and t13 include an element 1, and second image frames at moments t6, t7, t12, t13, t14, t15, and t16 include an element 2. Second image frames at the moments t12 and t13 each include the element 1 and the element 2.

An example in which the target element is a face is still used for description. It is assumed that it is determined, according to step S 103 and the foregoing steps, that M second image frames each include a face. Further, the electronic device may translate all faces included in the M second image frames into a corresponding string of numerical values with a fixed length according to a face feature extraction (Face Feature Extraction) algorithm. The numerical values may be referred to as a "face feature", and have a capability of representing a feature of the faces. If one second image frame includes a plurality of faces, a face feature needs to be extracted for each face. Then, features of every two faces in different second image frames are compared according to a face compare (Face Compare) algorithm, to calculate a similarity. When the similarity reaches a preset threshold, it may be determined that the two faces belong to a same person. In other words, based on the features of the faces included in the second image frames, the second image frames are classified according to different persons (which may be referred to as different leading roles).

S105: Determine, for each target element of the target type, a target video or a target picture corresponding to each target element.

The target video corresponding to each element may be consecutive video clips, or may be a picture set including a plurality of pictures, or may be a combination of a video clip and a picture set. A form of the target video is not limited in this embodiment of this application.

For example, information about the target video or the target picture may be determined based on an image frame corresponding to each target element. The information may include a start moment and an end moment of each clip in the target video, or may include locations of a start image frame and an end image frame of each clip in the first video, or may include moment information, location information, or the like of a specific image frame in the first video. This is not limited in this embodiment of this application. In some embodiments, when an element corresponds to a plurality of inconsecutive clips in the first video, some special effects of transition may be added during playing of the inconsecutive clips. This helps avoid frame freezing during playing of the inconsecutive clips, and helps improve user experience. In some other embodiments, clip information may further include aesthetic scores. Based on the aesthetic scores, the electronic device may extract image frame clips with relatively high scores to form a selected clip, or extract image frames with relatively high scores to form a selected picture set.

For example, as shown in FIG. 6(3), after performing step S104, the electronic device may learn that the element 1 corresponds to the second image frames at the moments t2, t3, t4, t10, t11, t12, and t13. In this case, clip information corresponding to the element 1 may include the moment t2 to the moment t4 and the moment t10 to the moment t13. Alternatively, clip information corresponding to the element 1 may include other information that can indicate locations of the image frames at the moments t2 and t4 in the first video, and information that can indicate locations of the image frames at the moments t10 and t13 in the first video. In this way, the electronic device may play, based on the clip information, a video clip corresponding to the element 1. The clip information corresponding to the element 1 may alternatively include time information or location information of any one or more of the second image frames at the moments t2, t3, t4, t10, t11, t12, and t13 in the first video. In this way, the electronic device may play, based on the clip information, a picture set corresponding to the element 2.

S106: Generate, for each target element of the target type, the target video or the target picture including each target element.

For example, the electronic device may generate, based on the information about the target video or the information about the target picture that is determined in step S105, the target video or the target picture including each element. The electronic device may directly edit the first video into the target video or the target picture. In other words, the first video is replaced with the target video or the target picture. Alternatively, the electronic device may generate a new video or picture based on the information determined in step S105, and use the new video or picture as the target video or the target picture. In other words, the first video is not modified. A manner of generating the target video or the target picture is not limited in this embodiment of this application.

After performing step S105, that is, after determining the information about the target video or the information about the target picture, the electronic device may generate the target video or the target picture. Alternatively, after determining the information about the target video or the information about the target picture, the electronic device may store the information in, for example, a database corresponding to a gallery application or a database of a video player. When the user needs to view a specific element, the electronic device may search a corresponding database for information about a target video corresponding to the element or information about a target picture corresponding to the element, and then generate the target video or the target picture. An occasion of generating the target video or the target picture is not limited in this embodiment of this application.

In some embodiments, the electronic device may extract, based on each element recognized in the first video, an icon (for example, a face thumbnail, a pet avatar, a building thumbnail, or an expression image) corresponding to each element from a second image frame including the element, and associate the icon corresponding to each element with clip information (for example, a target video or a target picture) corresponding to each element. In this way, the user may view, by operating the icon corresponding to each element, a clip corresponding to each element. Optionally, the electronic device may directly display an image of the target video or the target picture corresponding to each element, and the user may directly view the target video or the target picture through the image of the target video or the target picture.

Optionally, the electronic device may display, based on a preset priority, the icon corresponding to each element. The priority may be understood as a display order of the target video or the target picture. For example, an order of duration of target videos, an order of quantities of target pictures, or an order of names of elements may be used. A name of each element may be a default setting of the electronic device, or may be specified by the user. This is not limited in this embodiment of this application.

In some other embodiments, the electronic device may associate each element recognized in the first video with an element recognized in another picture or another file in the electronic device. The another picture or another file may be, for example, a photo in a gallery application, an avatar in an address book, or an avatar of a contact in an instant messaging application (for example, WeChat, QQ, Skype, or MSN).

In other words, the element recognized in the first video is associated with a same element recognized in the another picture or file. For example, in some gallery applications, there may be a function for clustering photos including a same person (the function may be referred to as a "person" function for short). With this function, when the user operates an image (for example, a face thumbnail) corresponding to a specific person, the electronic device displays all photos including the person. In this embodiment of this application, when the element is a person, the person recognized in the first video is associated with a person in a gallery application. In this way, when the user operates an image corresponding to a specific person, the electronic device may further display a video clip including the person.

Optionally, the electronic device may further display a name of each element, and the name may be a corresponding remark in another application. For example, the name may be a corresponding contact name in an address book, or may be a remark name of a contact in an instant messaging application. If an element recognized in the first video is not associated with an element in another picture or file, the user may be prompted to name the element or set a default name. This is not limited in this embodiment of this application.

Optionally, the electronic device may display, based on the preset priority, the icon corresponding to each element. Alternatively, for example, the electronic device may perform sorting based on a closeness relationship between the element recognized in the first video and the user. In this way, an element that the user is interested in can be highlighted, so as to help improve user experience. The closeness relationship between the element and the user may be positively correlated with a quantity of video files or picture files that include the element in the electronic device. The video files or the picture files that include the element may be all video files or picture files stored in the electronic device, or may be video files or picture files in a specific application, for example, video files or picture files in a gallery application, video files or picture files in a browser application, or images in a social network application. The closeness relationship between the element and the user may be alternatively determined based on the name of the element. For example, closeness of relatives such as parents is higher than that of friends. The closeness relationship between the element and the user may be alternatively determined based on closeness specified by the user. This is not limited in this embodiment of this application.

For example, it is assumed that a person A and a person B are recognized in the first video. An example in which a quantity of pictures or videos of a person that are included in a gallery application indicates closeness between the person and the user is used for description. If there is a picture file or video file that includes the person B, but there is no icon file or video file that includes the person A, it may be considered that compared with the person A, the person B is closer to the user. The electronic device may display an icon corresponding to the person B prior to a picture corresponding to the person A, to highlight importance of the person B relative to the user.

In some other embodiments, when extracting the target video or the target picture corresponding to each element, the electronic device may further determine duration of the target video or a quantity of target pictures according to some rules. For example, the duration of the target video may be positively correlated with closeness between the element and the user, or the quantity of target pictures may be positively correlated with closeness between the element and the user. In other words, more target videos or target pictures may be extracted for an element that the user is interested in. Fewer target videos or target pictures may be extracted for an element that the user is not interested in.

It can be learned that according to the method provided in this embodiment of this application, the electronic device can automatically recognize specific elements, such as a person that the user is interested in, a building that the user is interested in, and a pet that the user is interested in, in the video files, and automatically extract, from the video files, information about clips including the specific elements. This avoids a case in which the user manually searches for and edits a video, so that efficiency of interaction between the user and a terminal is improved, and user experience is improved. In addition, because the electronic device extracts, from the video according to a related algorithm in the image recognition technology, the clip including the specific element, a manual error is avoided, and reliability and accuracy of extracting the clip by the electronic device are improved.

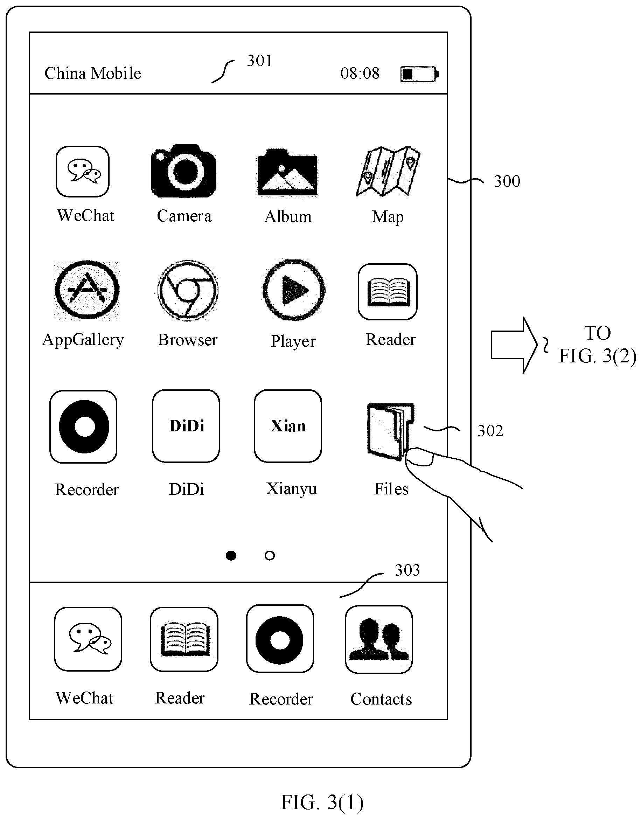

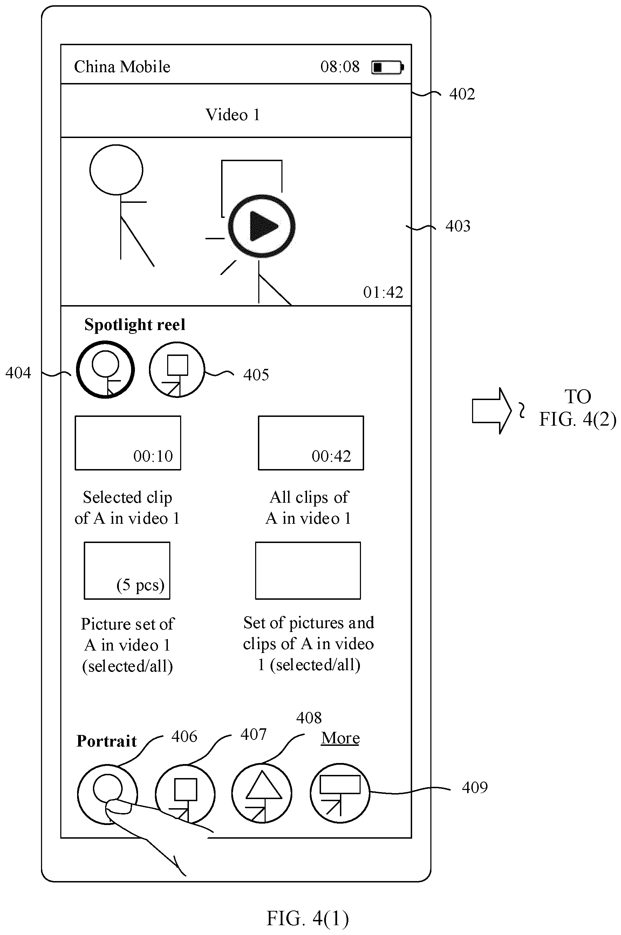

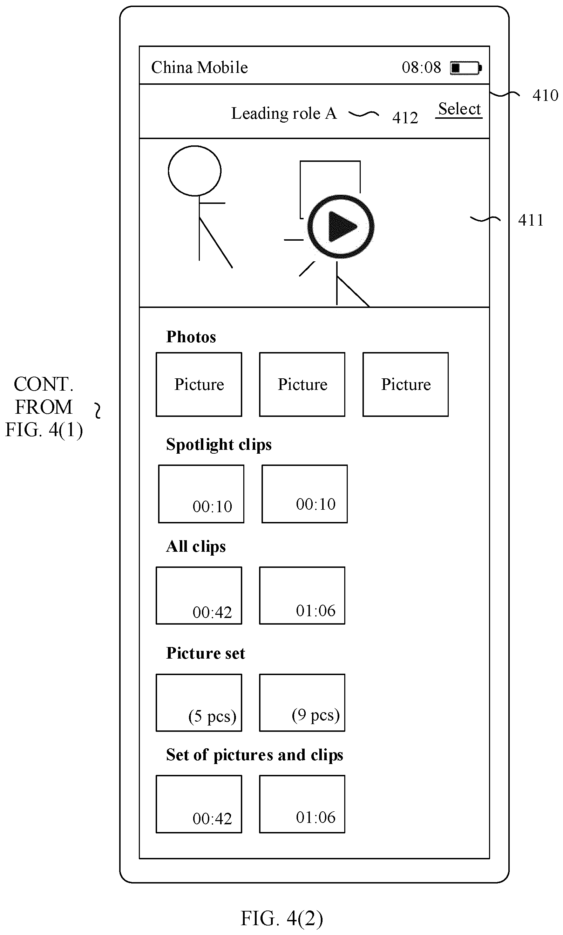

For example, FIG. 3(1) to FIG. 3(6) and FIG. 4(1) and FIG. 4(2) are diagrams of some user interfaces (User Interface, UI) in this embodiment of this application.

The user may enter a video file browsing interface and choose to view a corresponding video file. For example, the user may view a video file through a file management application or an album application (or referred to as a gallery application). Alternatively, the user may view a video through a player application, a browser application, or the like. A manner of viewing the video by the user is not limited in this embodiment of this application.

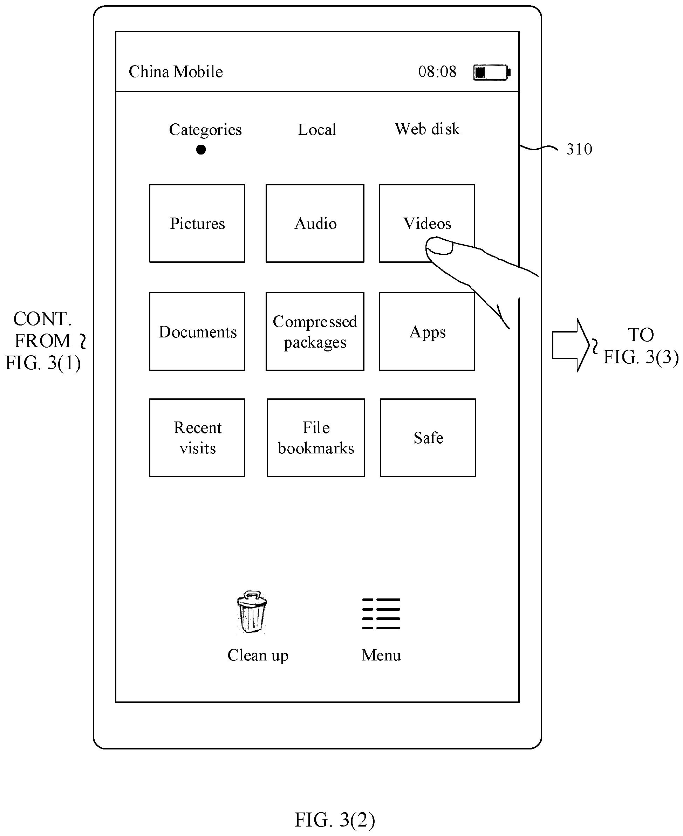

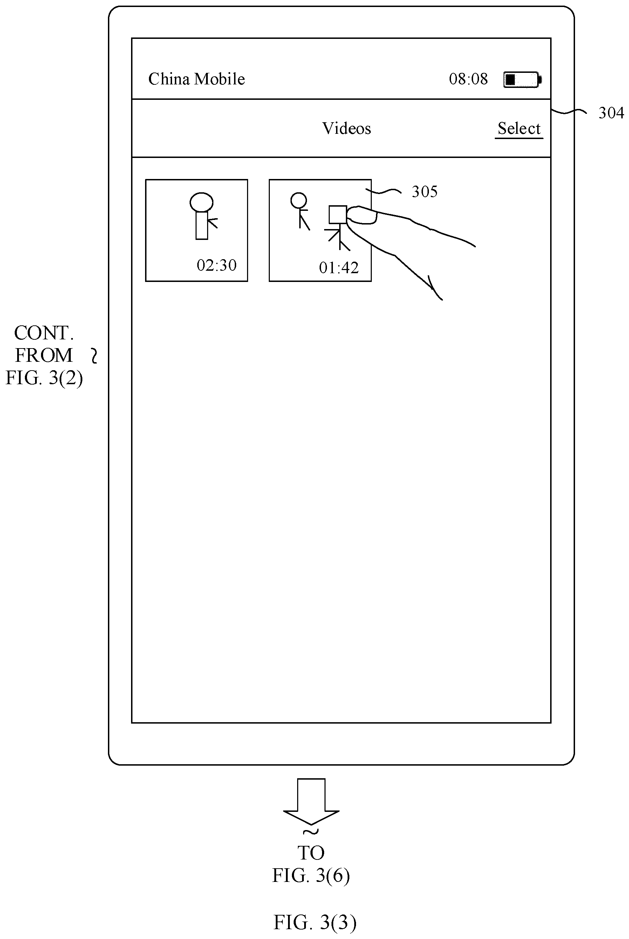

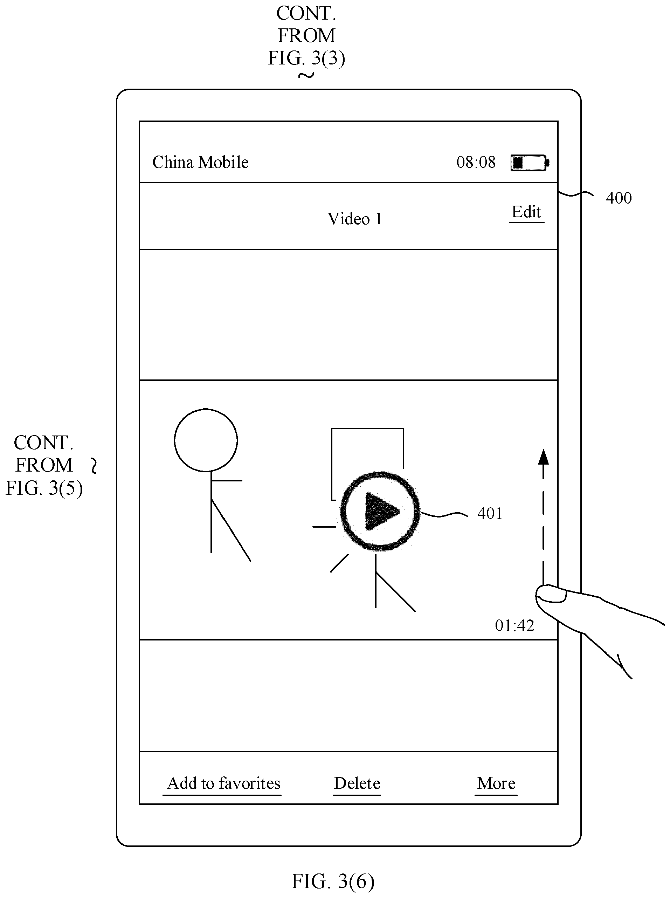

For example, FIG. 3(1) shows an interface 300 displayed by the electronic device. The interface 300 may include a status bar 301, a docking bar 303, and icons of a plurality of applications, for example, an icon 302 of a file management application. The user may enter a main interface of the file management application by tapping the icon 302. As shown in FIG. 3(2), an interface 310 is the main interface of the file management application. The user may choose to tap a "video" button to enter a video file browsing interface. As shown in FIG. 3(3), an interface 304 is the video file browsing interface. The user may select or tap an icon of a corresponding video file, for example, an icon 305, to enter an interface for viewing the video. As shown in FIG. 3(6), an interface 400 is the interface for viewing the video (for example, a video 1). The user may tap a play control 401 to play the video. Function buttons such as "edit", "favorites", "delete", and "more" may be further displayed in the interface 400. The user may perform editing, collection, deletion, and another operation on the video through the function buttons. Details are not described herein.

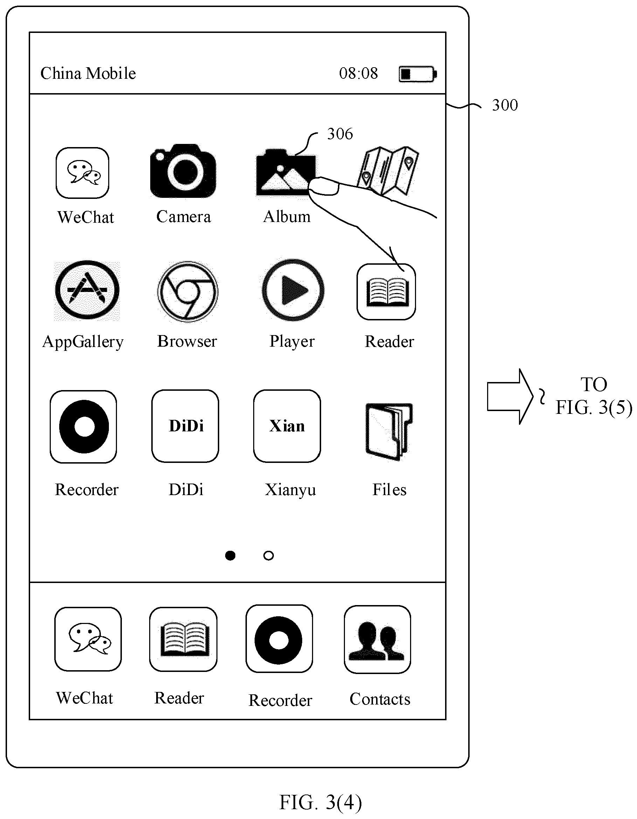

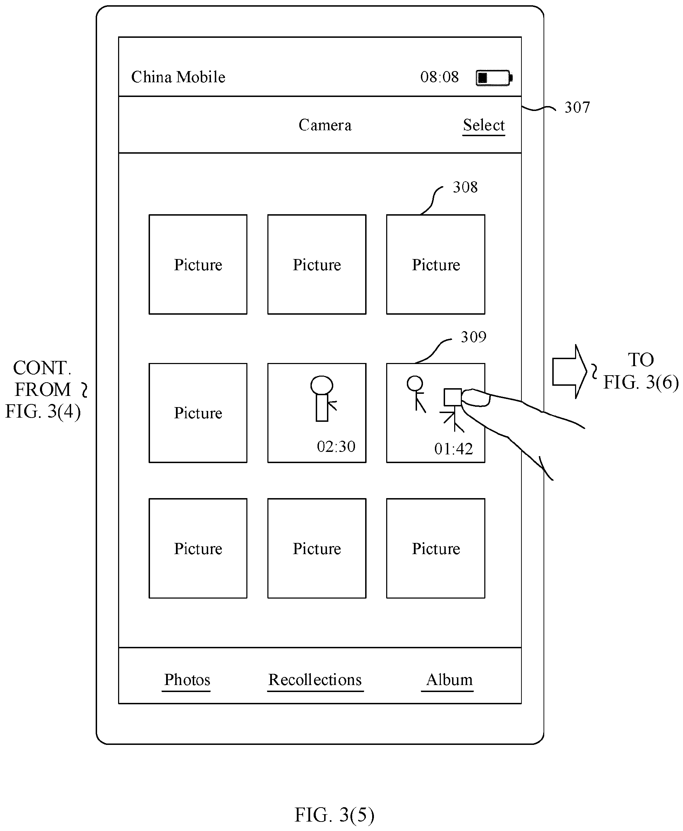

Optionally, as shown in FIG. 3(4), the user may alternatively enter a browsing interface in an album application by tapping an icon 306 in the interface 300. As shown in FIG. 3(5), an interface 307 is the browsing interface in the album application. The interface 307 displays picture thumbnails, such as an icon 308, and video thumbnails, such as an icon 309. The user may select or tap an icon of a corresponding video file, for example, an icon 309, to enter an interface for viewing the video, for example, an interface 400.

As shown in FIG. 3(6), in the interface 400, for example, the user may slide upward within a specific area, to enter an interface 402 shown in FIG. 4(1). The specific area may be, for example, an area in which an image of a video 1 is displayed in the interface 400. It should be noted that the user may alternatively enter the interface 402 from the interface 400 in another manner. For example, the interface 400 displays a specific button, and the user may enter the interface 402 by tapping the specific button. Alternatively, the interface 400 may display a specific menu, and the user enters the interface 402 by selecting a specific option. Alternatively, the user may enter the interface 402 by performing another specific gesture in the interface 400. This is not limited in this embodiment of this application.

An image 403 of the video 1 may be displayed in the interface 402, a play control is displayed on the image 403, and the user may tap the control to play the video 1. The interface 402 may further display an icon associated with each element included in the video file, for example, an icon 404 of an avatar of the person A (or referred to as a leading role A) and an icon 405 of an avatar of the person B (or referred to as a leading role B). In some examples, the interface 402 may display icons of all elements determined in the video file, or icons of a specific quantity of elements (for example, all the determined elements are sorted based on specific priorities, and first several elements are selected). In some other examples, the interface 402 may alternatively display an icon of a specific element selected by the user. For example, after determining each element in the video file, the electronic device may display an interface, and the interface may be used to prompt the user to select a specific element that the user is interested in. This is not limited in this embodiment of this application.

The element may be any one or more of a face, an expression, an action, an article, a building, a pet, and a user-defined type, and may be specifically determined based on desired content of the user in the video 1. The icons associated with all the elements may be arranged in specific order. For example, the icons may be arranged in time order in which the elements appear in the video 1, or may be arranged based on duration of a clip corresponding to each element extracted from the video 1. If each element extracted from the video 1 is associated with an existing element in the electronic device, arrangement may be performed based on an order of a name of each element, a frequency of occurrence of each element, a closeness relationship between each element and the user, or the like. An arrangement order of the elements is not limited in this embodiment of this application. FIG. 4 shows only a case in which the element is a person. In other words, an example in which the user is interested in the person in the video 1 is used for description.

Optionally, the name of the element may be specified by the electronic device by default. Alternatively, after each element in the video file is determined, the user may be prompted to enter a name of each element. Optionally, if the element determined in the video file is associated with a same existing element in the electronic device, a name of the associated existing element may be directly used for the element. If no existing element in the electronic device can be associated with the element, the electronic device sets a name of the element by default or prompts the user to set a name of the element. This is not limited in this embodiment of this application.

In some embodiments, in response to an operation that the user taps the icon 404, the electronic device displays an icon corresponding to any one or more items in a clip, a picture set, or a combination of a clip and a picture set that includes the person A in the video 1. The clip including the person A is a video clip that includes the person A and that is extracted from the video 1. Usually, duration of the video clip is shorter than duration of the video 1. In other words, each frame of image in the clip including the person A includes the person A. For a specific extraction method, refer to the description in the foregoing embodiment. The clip including the person A may specifically include a selected clip including the person A and all clips including the person A in the video 1. The selected clip including the person A in the video 1 is some clips with relatively high aesthetic scores in video clips that are extracted from the video 1 and that include the person. The picture set including the person A refers to a plurality of pictures that are extracted from the video 1 and that include the person A. In response to an operation that the user taps an icon corresponding to the picture set, the electronic device may display the plurality of pictures, or may dynamically play the pictures in a form of a slideshow. For specific implementation, refer to the description in the foregoing embodiment. Details are not described herein again. In some other embodiments, the electronic device may first display, by default, a clip, a picture set, or a combination of a clip and a picture set that corresponds to an element arranged in the first place or in another location.

In response to an operation that the user taps the icon 405, the electronic device displays a clip, a picture set, or a combination of a clip and a picture set that includes the person B in the video 1.

Information about an association between each element extracted from the video 1 and another picture or another file in the electronic device may be further displayed in the interface 402. For example, an icon (for example, an icon 406, an icon 407, an icon 408, and an icon 409) of an avatar related to a portrait (or referred to as a person) in a gallery application may be further displayed in the interface 402. Persons corresponding to the icon 406 and the icon 407 appear in the video 1. Persons corresponding to the icon 408 and the icon 409 do not appear in the video 1.

In response to an operation that the user taps the icon 406, the electronic device displays an interface 410 shown in FIG. 4(2). A control 412 of a name of the person A may be displayed in the interface 410. The user may change the name of the person A by tapping the control 412. An image 411 of a video including the person A may be further displayed in the interface 410. A play control may be displayed on the image 411. In response to an operation that the user taps the play control, a video clip including the person A is played. The video clip may be the clip and/or the picture set that includes the person A in the video 1. Alternatively, the video clip may be all clips and/or picture sets that include the person A in the electronic device. This is not limited in this embodiment of this application. Any one or more of a picture, a spotlight clip, all clips, a picture set, and a set of pictures and clips that includes the person A in the electronic device may be further displayed in the interface 410. In response to an operation that the user taps or selects a picture or a video clip, the electronic device displays the corresponding picture or plays the corresponding video.

It should be noted that the foregoing embodiment is described by using an example in which a clip or a picture including a related element extracted from a video file is viewed in an upward sliding interface of a viewing interface of the video file. It may be understood that, in this embodiment of this application, a specific interface for displaying a clip or a picture including a specific element extracted from the video file is not limited, and a specific display manner is not limited either.

It may be understood that, to implement the foregoing functions, the foregoing terminal or the like includes corresponding hardware structures and/or software modules for performing the functions. A person skilled in the art should easily be aware that, in combination with the example units, algorithms, and steps described in the embodiments disclosed in this specification, the embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of the present invention.

In the embodiments of this application, the terminal or the like may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in the embodiments of the present invention, division into modules is an example, and is merely logical function division. In actual implementation, there may be another division manner.

The foregoing descriptions about implementations allow a person skilled in the art to clearly understand that, for the purpose of convenient and brief description, division into only the foregoing function modules is used as an example for illustration. In actual application, the foregoing functions can be allocated to different function modules for implementation based on a requirement, that is, an inner structure of an apparatus is divided into different function modules to implement all or some of the functions described above. For a detailed working process of the foregoing system, apparatus, and unit, refer to a corresponding process in the foregoing method embodiments. Details are not described herein again.

Function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of the embodiments of this application essentially, or the part contributing to the prior art, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in the embodiments of this application. The foregoing storage medium includes: any medium that can store program code, such as a flash memory, a removable hard disk, a read-only memory, a random access memory, a magnetic disk, or a compact disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A video file processing method, comprising:
obtaining, by an electronic device, first video information, wherein the first video information comprises at least a part of a target video or a target picture;
recognizing, by the electronic device, a target element comprised in the first video information; and
generating, by the electronic device based on the first video information, the target video or the target picture that comprises the target element.

2. The video file processing method according to claim 1, wherein the recognizing, by the electronic device, a target element comprised in the first video information comprises:
performing, by the electronic device, frame extraction on the first video information, to obtain at least one first image; and
performing, by the electronic device, cluster analysis on the at least one first image, to determine at least one second image, wherein the second image comprises the target element.

3. The video file processing method according to claim 1 or 2, further comprising:
displaying, by the electronic device, an icon of the target video or the target picture based on a preset priority, wherein the priority is a display order of the target video or the target picture.

4. The video file processing method according to claim 3, wherein the preset priority comprises an order of closeness between the target element and a user, and the closeness between the target element and the user is positively correlated with a quantity of pictures or videos that comprise the target element and that are stored in the electronic device.

5. The video file processing method according to claim 4, wherein the picture or the video that comprises the target element and that is stored in the electronic device is any one or more of a picture or a video in a gallery application, a picture or a video in a social network application, and a user avatar.

6. The video file processing method according to claim 4 or 5, wherein the generating, by the electronic device based on the first video information, the target video or the target picture that comprises the target element comprises:
generating, by the electronic device based on the first video information and the closeness between the target element and the user, the target video or the target picture that comprises the target element, wherein duration of the target video is positively correlated with the closeness between the target element and the user, or a quantity of target pictures is positively correlated with the closeness between the target element and the user.

7. The video file processing method according to any one of claims 1 to 6, wherein the obtaining, by an electronic device, first video information comprises:
automatically obtaining, by the electronic device, video information in the video file; or
automatically obtaining, by the electronic device, video information in a video file when detecting that the electronic device is playing the video file; or
obtaining, by the electronic device, recorded video information in a video file when detecting that the electronic device is recording the video file; or
obtaining, by the electronic device, video information in a video file when detecting a first operation of the user for choosing to process the video file.

8. The video file processing method according to any one of claims 1 to 7, wherein the target element comprises any one of a portrait, an action, a building, an animal, and an article.

9. An electronic device, comprising a processor, a memory, and a touchscreen, wherein the memory and the touchscreen are coupled to the processor, the memory is configured to store computer program code, the computer program code comprises a computer instruction, and when the processor reads the computer instruction from the memory, the electronic device is enabled to perform the following operations:
obtaining first video information, wherein the first video information comprises at least a part of a target video or a target picture;
recognizing a target element comprised in the first video information; and
generating, based on the first video information, the target video or the target picture that comprises the target element.

10. The electronic device according to claim 9, wherein in a process in which the processor recognizes the target element comprised in the first video information and determines the target video or the target picture corresponding to the target element,
the processor is specifically configured to: perform frame extraction on the first video information, to obtain at least one first image; and
perform cluster analysis on the at least one first image, to determine at least one second image, wherein the second image comprises the target element.

11. The electronic device according to claim 9 or 10, wherein
the touchscreen is configured to display an icon of the target video or the target picture based on a preset priority, wherein the priority is a display order of the target video or the target picture.

12. The electronic device according to claim 11, wherein the preset priority comprises an order of closeness between the target element and a user, and the closeness between the target element and the user is positively correlated with a quantity of pictures or videos that comprise the target element and that are stored in the electronic device.

13. The electronic device according to claim 12, wherein the picture or the video that comprises the target element and that is stored in the electronic device is any one or more of a picture or a video in a gallery application, a picture or a video in a social network application, and a user avatar.

14. The electronic device according to claim 11 or 13, wherein in a process in which the processor generates, based on the first video information, the target video or the target picture that comprises the target element,
the processor is further specifically configured to generate, based on the first video information and the closeness between the target element and the user, the target video or the target picture that comprises the target element, wherein duration of the target video is positively correlated with the closeness between the target element and the user, or a quantity of target pictures is positively correlated with the closeness between the target element and the user.

15. The electronic device according to any one of claims 9 to 14, wherein in a process in which the processor obtains the first video information,
the processor is specifically configured to: automatically obtain video information in the video file; or
automatically obtain video information in a video file when detecting that the electronic device is playing the video file; or
obtain recorded video information in a video file when detecting that the electronic device is recording the video file; or
obtain video information in a video file when detecting a first operation of the user for choosing to process the video file.

16. The electronic device according to any one of claims 9 to 15, wherein the target element comprises any one of a portrait, an action, a building, an animal, and an article.

17. A computer storage medium, comprising a computer instruction, wherein when the computer instruction is run on a terminal, the terminal is enabled to perform the video file processing method according to any one of claims 1 to 8.

18. A computer program product, wherein when the computer program product is run on a computer, the computer is enabled to perform the video file processing method according to any one of claims 1 to 8.
